# EUROPEAN PATENT SPECIFICATION

(11) **EP 3 826 512 B1**
(45) Date of publication and mention of the grant of the patent: **22.05.2024**
(21) Application number: 19752124.8
(22) Date of filing: 25.07.2019
(51) Int. Cl.: A47G 9/02, A61G 7/00, B32B 5/22, A47G 9/00, A47G 9/10, A61G 13/12, B32B 27/12, B32B 27/32, B32B 5/18, B32B 5/24, B32B 7/14

(54) **INFECTION CONTROL BEDDING PRODUCTS AND METHODS OF MANUFACTURE THEREOF**
PRODUKTE ZUR INFEKTKONTROLLE FÜR BETTZEUG UND VERFAHREN ZU IHRER HERSTELLUNG
PRODUITS DE LITERIE DE LUTTE CONTRE L'INFECTION ET LEURS PROCÉDÉS DE FABRICATION

(30) Priority: 27.07.2018 GB 201812330; 30.07.2018 SG 10201806474V
(43) Date of publication of application: 02.06.2021
(73) Proprietor: Pneuma Pure IP Limited, Dublin 18 (IE)
(72) Inventor: WOOLFSON, David, Dublin 18 (IE); JÜRISOO, Sven, Dublin 18 (IE); LIND, Lyane, Dublin 18 (IE); PAE, Sulev, Dublin 18 (IE)
(74) Representative: HGF
(86) International application number: PCT/EP2019/070135
(87) International publication number: WO 2020/021048

(56) References cited:
- EP-A1- 2 209 405
- CN-U- 201 510 005
- US-A1- 2007 283 498
- US-B1- 6 351 864

## Description

The present invention relates to improvements in and relating to a hermetically sealed infection control bedding product such as a pillow, duvet, mattress, cushion and such like. The present invention also relates to a method of manufacture of a vented hermetically sealed infection control bedding product.

### Background to the invention

Infection control and cross infection present a major problem for hospitals today, leading to considerable expense and inconvenience. Bacterial strains have developed which are increasingly more resistant to treatment by antibiotics. Therefore, once an infection is established in a hospital, it is often difficult to eradicate and can spread quite rapidly. A problem known as "strikethrough", where a contaminated fluid penetrates to an interior of an infection control bedding product such as a pillow, duvet, mattress, or cushion, is well known. If "strikethrough" occurs, then there is a considerable risk of cross infection associated with any of these infection control bedding products since they are likely to be used subsequently by many different patients. Indeed, this problem arises in any situation where there is a regular change in persons using pillows, duvets and the like, such as, for example, in hotels and guesthouses. Furthermore, in the home, many people with allergies and breathing disorders have problems with fungal infection and dust mites.

There are numerous commercially available materials typically used for waterproof covers on mattresses, typically comprising a knitted or woven nylon fabric, with a thermoplastic coating, typically polyurethane, applied. The knitted or woven fabric provides mechanical strength, while the thermoplastic (polyurethane) coating provides waterproofing.

Some such fabrics are termed "vapour permeable" because tiny pores exist at sub-micron level in the coating, that nominally allow transport of water vapour molecules. However, these fabrics do not allow transfer of air at sufficient rates to ventilate a pillow.

EP2209405B1 teaches an hermetically sealed cushioning device comprising a vent means in the cover characterized in that the vent means comprises a filter medium including a filter membrane for the removal of particles of microbial size.

EP2209405B1 typically discloses the use of a polyurethane coated polyamide or nylon material for the outer cover of the cushioning device and whilst polyamide is well suited to the welding process, in particular high frequency welding, it is considerably more expensive per linear metre than, for example, polyester backed polyurethane coated textiles. However, when using the less expensive material, for example, polyester backed polyurethane coated textiles for the outer cover of the cushioning device, a problem was encountered in achieving an adequate bond between the layers comprising the filter that is disclosed in EP2209405B1 i.e. membrane, strengthening layer/s and gasket. Therefore, a need arose for an improved method to provide a filter of the type disclosed in EP2209405B1, providing a high strength bond between the layers of the filter when using the less expensive material, for example, polyester backed polyurethane coated textiles for the outer cover of the cushioning device.

The present invention aims to addresses and solve this technical problem.

In addition, a further problem was found to exist when using the method disclosed in European Patent specification No. EP2209405B1 in relation to larger cushioning devices e.g. mattresses and operating theatre table toppers of the type that are used on the surface on which patients lie for surgical procedures in hospital operating theatres where there is a need for more rapid airflow because the volume of air in , for example,, a mattress, is much greater than, for example,, a pillow. Slower air evacuation through the filter or filters from a mattress when the subject is loaded onto the mattress or moves on the mattress means that the mattress can be less comfortable due to the slow dissipation of the balloon effect. In a medical setting it can increase the risk of patient skin tissue damage to the patient as the surface tension of the cover created by the balloon effect contributes to capillary occlusion which in turn can lead to patient skin tissue damage and potentially, decubitus ulcers. The present invention addresses and solves this problem. As will be further described in detail herein below the introduction of a high airflow strengthening layer with adhesive micro-dotting solves both the problems of bond strength when bonding the filter medium and outer cover together and the need for greater airflow especially in relation to larger volume cushioning devices. The adhesive micro-dotting layer replaces the strengthening layer disclosed in EP2209405B1. Thus, the filter medium disclosed in the present invention is materially different to the filter medium disclosed in EP2209405B1 and provides enhanced bond strength and airflow as a consequence.

The need for further improvement in relation to EP2209405B1 was observed with respect to ER (Emergency Room) and OR (Operating Room) table toppers which are low profile mattress toppers that provide cushioning to patients. Cushioning devices need to be especially robust for these applications due to the high load bearing and usage requirement and the greater fluid and contamination challenge to seam and filter integrity of the cushioning device. A further embodiment of the present invention addresses and solves this need.

Accordingly, the present invention relates to an improved infection control bedding product e.g. a mattress having technical improvements in particular, superior airflow and greater bond strength over the bedding product disclosed in EP2209405B1.

The present invention relates to a hermetically sealed infection control bedding product as claimed in claim 1 and a method of manufacture of a hermetically sealed infection control bedding product as claimed in the independent method claim of the appended claims. Preferred features are also claimed in the dependent claims appended hereto.

### Detailed Description

The invention will now be described more particularly with reference to the accompanying drawings, in which are shown, by way of example only, three embodiments of a pillow in accordance with the present invention.

The embodiments shown in the drawings comprise an infection control pillow but of course, it is to be understood that a pillow is provided as an example only, and that many other infection control bedding
Products are within the scope of the present invention.

In the drawings:
Figure 1 is a plan view of the inside of a pillow relating to all the embodiments of the present invention;
Figure 2 is an exploded view of the layers of materials included in the first embodiment of the infection control bedding product of the present invention;
Figure 2A is a schematic diagram of the layers of the components with an exploded view showing the glue dots applied to the strengthening layer as shown in Figure 2A(iii) and Figure 2A (iiia);
Figure 3a is a schematic view of the pillow of the first embodiment including the filter medium in accordance with the present invention;
Figure 3b is a sectional view along the line A- A of Figure 3a and showing a detailed construction of the filter medium of the first embodiment prior to welding.
Figure 4 is a schematic view of the pillow of the first embodiment including the filter medium after High Frequency (HF) welding;
Figure 4b is a sectional view along the line B-B of the filter medium shown in the first embodiment in Figure 3(a) showing the construction of the filter medium after welding;
Figure 4c is an electron microscope image of the interface between the filter medium/pillow cover fabric, following welding;
Figure 5 is an exploded view of the layers of materials included in the second embodiment of the infection control bedding product of the present invention;

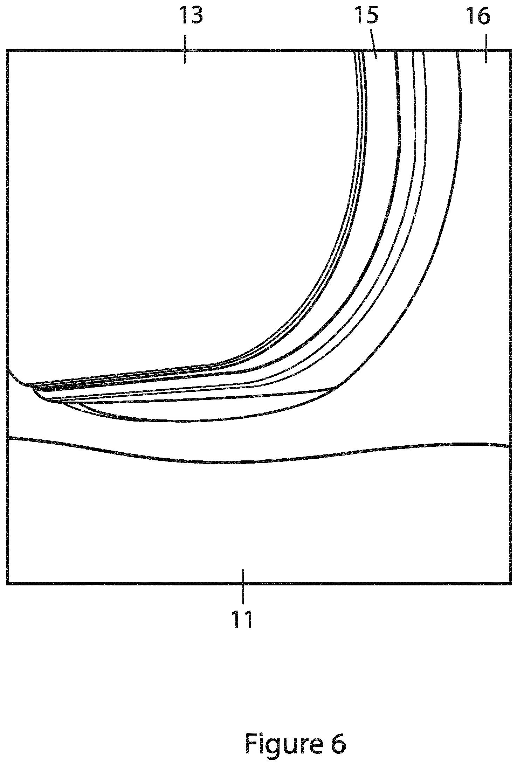

Figure 6 is a perspective view showing the assembled layers stacked on top of the welding tool with the welding tool surface being dimensioned so that it has a greater surface area than the area of the assembled layers so as to ensure that the respective edges are completely sealed together; and
Figure 7 is a plan view showing the final infection control product with the pillow cover welded to the filter medium and the strengthening layer.

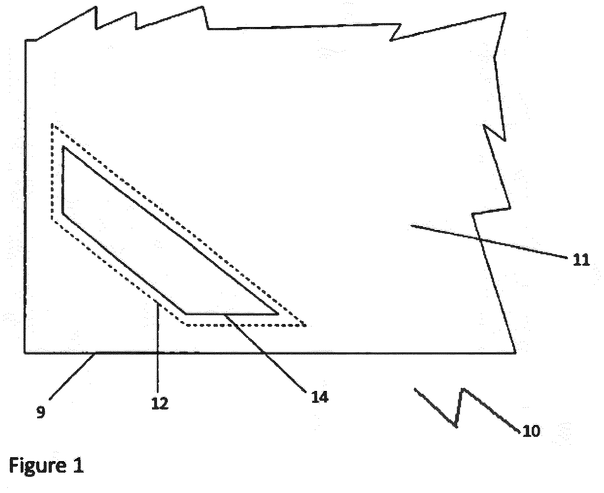

Referring now to Figure 1, a first embodiment of a pillow in accordance with the invention is indicated generally by reference numeral 10. The pillow 10 comprises a waterproof coated fabric cover 1 and incorporates a section of filter medium 12. The fabric cover 1 encases the filling of the pillow and is formed of a weldable material which is coated in polyurethane which provides a fluid resistant (waterproof) coating on the cover.

The filter medium comprises a filter membrane which may comprise a non-woven membrane, made of thermoplastic material. In the preferred embodiment, the filter membrane is formed of a membrane having a membrane support backing. Thus, for instance, the filter membrane is manufactured of an oleophobic expanded PTFE membrane having a membrane support backing. The backing layer is fused or laminated to the PTFE membrane. It has been found by experimentation that the optimal pore size of the filter membrane for this use is in the range of 2 - 4 microns. This pore size allows sufficient air-flow to ventilate the infection control bedding product which will be referred to herein, purely by way of example, as a pillow, dynamically when impacted by a user's head. This pore size has also proved by experimentation to have 100% filtration efficiency in terms of removing microbial load, while providing resistance to water in the region of 0.2-0.8 bar entry pressure.

The intrinsic mechanical weakness of the necessarily thin filter membrane is overcome by providing an additional strengthening layer of a synthetic material such as polypropylene, preferably spun fibre polypropylene, which provides mechanical strength to the filter membrane. The strengthening layer of polypropylene is bonded to the filter membrane by adhesive applied in the form of a plurality of glue dots placed on the surface of the strengthening layer which is facing the filter membrane. When heat is applied, the adhesive of glue dots melt and bond the two entities together, resulting in an assembly referred to as the "filter medium". The infection control bedding product of the present invention comprising the above construction results in an increase in airflow of 5 1/s/m² through the filter medium relative to the infection control bedding product disclosed in EP 2209405B.

In the first embodiment of the pillow 10, it was found by experimentation that if a pillow bursts in use, the most common point of failure is the welding seam, specifically, at that point where the filter medium 12 is incorporated into the seam.

This mechanical failure is considered to occur for two reasons:
1) The geometry of the seams renders them subject to peel forces; and
2) The weld strength when welding the filter medium 12 to another substrate is substantially stronger when the expanded polytetrafluoroethylene (PTFE) (strength-providing) layer is next to the substrate to which the material is being welded. On the other hand, if the waterproof layer is next to the substrate to which the filter medium is being welded, delamination of this waterproof layer may occur, and a strong weld is not achieved.

The pillow in the first embodiment is indicated generally by reference numeral 10 and comprises a waterproof pillow cover 11, a filter medium 12, and seam 9. The cover 11 is manufactured of polyurethane-coated polyester. Referring to figure 1, the pillow 10 includes a window 14 which is die-cut in the cover material 11. This window 14 may be any shape and is substantially removed from the seams 9 of the pillow. Figure 1 shows the inside of the pillow cover 11.

As shown in Figure 1, the filter medium 12 is cut so that it is a similar shape and of similar dimensions to those of the window (aperture) 14 except that the filter medium 12 is slightly larger than the window 14 to allow overlap of the filter medium 12 beyond the edges of the window 14. The orientation of the filter medium 12 is such that the filter membrane/waterproof layer is facing outwards (away from the viewer in this figure) and the support layer which provides mechanical strength, forms the facing layer for welding to the coated side of the pillow cover.

This arrangement solves both of the mechanical failure problems by removing the filter medium 12 from the seam area, to an area where no peel forces are experienced, and by maintaining the correct orientation of surface contact between media for welding.

With the filter medium of the present invention, the filter membrane provides the liquid resistance, but allows for air permeability due to the construction of the support backing. The addition behind the filter membrane of the strengthening layer, preferably manufactured of a spun non-woven polypropylene (PP) material (alternatively, other synthetic materials could be used for this purpose), provides the additional strength required around the welded join of the filter medium to the window/strip provided in the pillow cover for the application of the filter. This is achieved because of the strengthening layer
being formed of meltable material (i.e. the non-woven PP) being melted into the PU coating of the pillow cover fabric as well as into the filter membrane, thereby providing a stronger welded seam to prevent the risk of the infection control product bursting.

In addition, the window/strip is designed so that the seams (joining edges) of the filter medium/window are not integrated with the main perimeter welded seam of the pillow where it would weaken the overall strength of the seam. Therefore, the window has been re-designed in such a way that its edges or "frame" is separate and distinct from the edges of the pillow cover allowing for the strong weld of the medium/window described whilst maintaining the integrity of the main welded seam of the pillow. In the embodiment which is shown in and described with reference to Figures 1, only one vent is provided on the pillow 10. However, it will be understood that any number of vents may be provided as required, each with an appropriate bacteriological filter medium associated therewith.

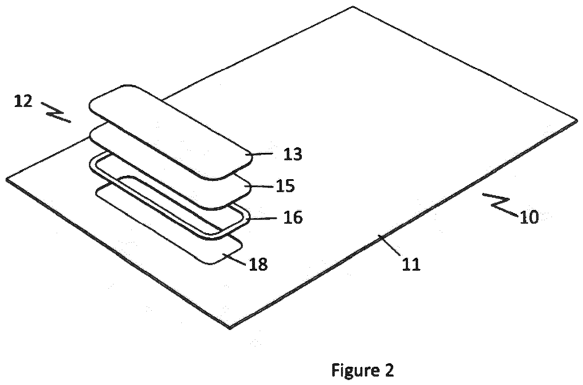

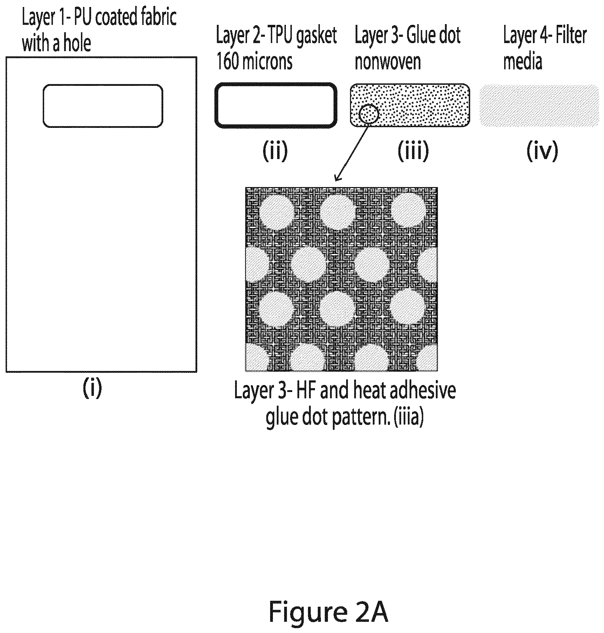

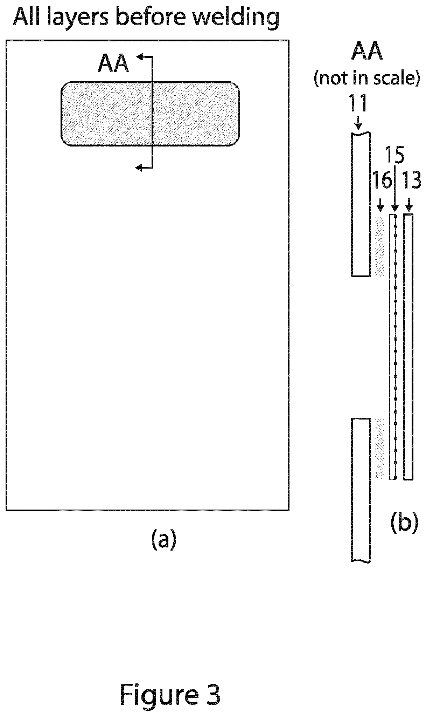

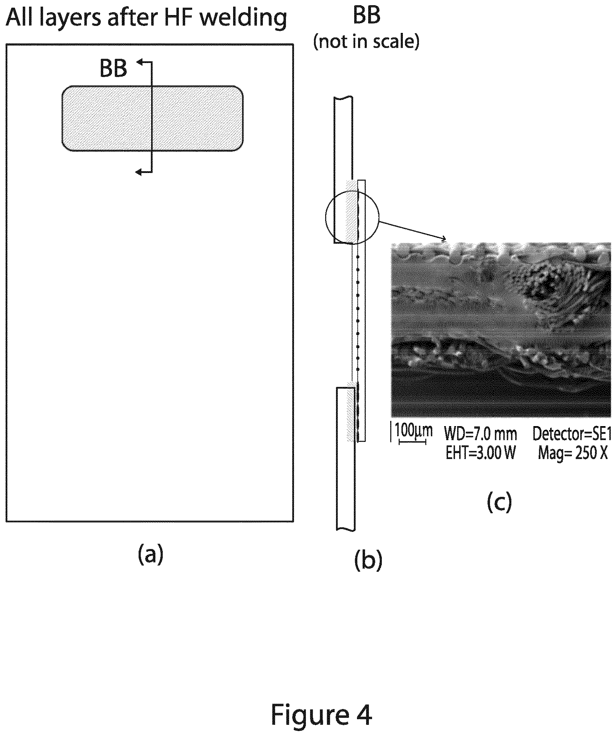

Referring now to the Figure 2 the infection control pillow in the first embodiment is indicated generally by reference numeral 10 and the pillow 10 includes a filter medium indicated generally by the reference numeral 12. The infection control pillow 10 includes a pillow cover 11, a filter medium 12 comprising a polyurethane (PU) gasket 16, spun-bonded polypropylene strengthening layer 15 and filter membrane 13. After each of these components has been affixed together preferably by welding, each of these layers will be compressed together to form the infection control product of the present invention. The presence of the gasket improves the welding strength of the entire vent following application of heat, and it has a thickness of 160 microns. The initial non-welded vent structure shown in Figure 3 a and b, and the results of welding are shown in Figures 4a, b and c.

### Components of the infection control pillow product in the first embodiment

- Main Pillow Cover 11 manufactured of polyurethane (PU) coated polyamide -
- membrane 13
- Spun-bonded Polypropylene membrane 15 having an adhesive layer applied preferably in the form of a plurality of glue dots;
- PU gasket 16.

Details of each component:
Pillow cover 11
   - The pillow cover 11 is manufactured of 90 g/m2 polyurethane coated on the bottom by 60g/m2 polyester
   - The PE coating provides protection against fungi and bacteria.
   - The infection control product including the vent is washable at 75°C. The infection control product is gentle to the skin and also has the advantage that the inclusion of the vent in the product does not create noise which is, of course, undesirable in particular when the product is used in a hospital environment by a patient.
Filter Membrane
   - The filter membrane 13 is a breathable membrane which allows air to be expelled from within the pillow when compressed thereby preventing the unwanted effect of 'ballooning' around the patient's head/mouth.
   - The breathable membrane 13 also protects the structure (including the RF welded seams) of the infection control product, ensuring the seams are not overstressed when the pillow is compressed, basically preventing a rupture should the entire pillow be compressed.
   - The membrane 13 has been tested vigorously as a microbial barrier and performed extremely well.

According to the present invention, the filter medium comprises the strengthening layer which is bonded to the filter membrane by adhesive, preferably, applied in the form of a plurality of glue dots placed on the surface of the strengthening layer 15 which is facing the filter membrane 13. When heat is applied, the adhesive of glue dots melts and bonds the strengthening layer and the filter membrane together.

In more detail, the filter medium construction will be described as follows: Spun-bonded polypropylene layer with a plurality of glue dots 15
- The periphery shape and dimensions equal to membrane 13.
- The purpose of including the spun-bonded polypropylene is to add greater strength to the vent area. The spun-bonded polypropylene layer 15 is inserted behind the 1 membrane 13 and it prevents simple punctures from hands/fingers.
- The addition of a plurality of glue dots allows for stronger binding of the vent components to one another following welding and increases the rate of air flow to prevent ballooning of the pillow.

Polyurethane (PU) Gasket 16
- The polyurethane gasket is slightly smaller than the rectangular RF weld area, yet slightly larger than the membrane and spun-bonded polypropylene. This ensures that the edge of membrane and spun-bonded polypropylene are completely sealed down to the pillow cover surface. Thus the edges of each of the layers are sealed and compressed, thereby resulting in a completely smooth, patient friendly, surface.
- The purpose of the PU gasket 16 is to add more plastic to the weld area, allowing more plastic to flow into the Spun-bonded polypropylene layer, the membrane 13 and the PU coated pillow cover, increasing the quality/strength of the bond of the various layers.
- It has a thickness of 160 microns.

### Welds

### 1. Long welds along the pillow cover edges

The long welds along the edges of the pillow cover are fully RF welded. This gives a seam which is completely impermeable to liquid.

### 2. Closing Weld to complete filled pillow

Whether RF welded or heat sealed closed, the closing weld encapsulates the pillow filler and completes the impermeable peripheral seam.

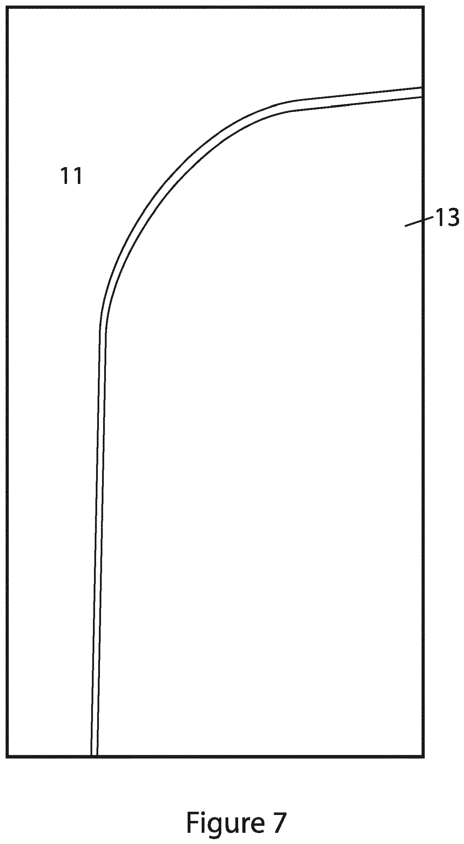

Referring now to Figure 7, the components of the vent 12 are shown stacked on top of the welding tool. The welding tool has a larger surface than the components, so as to ensure that the edge around the perimeter of the vent 12 and the aperture 18 is completely sealed.

Referring now to Figure 8, a finished weld is shown, a glossy bead of PU is provided around the perimeter of the membrane 13 and spun-bonded polypropylene 15. The PU ensures the edge is sealed and impermeable.

The method of manufacture of the first embodiment of the hermetically sealed infection bedding product such as a cushion, pillow, duvet, mattress or such like, in accordance with the invention comprises the steps of:
a) providing a filter membrane, consisting of a top layer of bi-component nonwoven-composition polyester and polyethylene, treated with oleophobic coating and a bottom, strengthening layer preferably, consisting of oleophobic ePTFE membrane laminate
b) providing a strengthening layer, consisting of glue-doted polyester, 24 g/mg
c) providing a gasket with a thickness of 160 microns
d) providing a cover of the bedding product, the cover having an aperture;
e) locating the PU gasket, the strengthening layer and the filter membrane in the aperture
f) affixing the layers a), b), c) and the cover of the product together so that the layers are sealed together and are impermeable to liquid, whereby the filter membrane, strengthening material and the gasket are bonded together with the cover of the infection control bedding product, at the aperture in the cover so as to provide a vent in the infection control bedding product.

The layers of the filter medium 12 are bonded together by gluing or welding such as heat welding, ultrasonic welding, compression welding, High Frequency (HF) welding or RF welding. Preferably, the bonding is carried out by RF welding with the RF welding apparatus operating in a range of 27.12 MHz 6 160 Kilohertz. In order to produce the infection control pillow 10, a welding apparatus is used in which the welding action required is performed effectively. The method for producing the infection control product 10 as described above ensures that the product 10 can be replicated and mass produced.

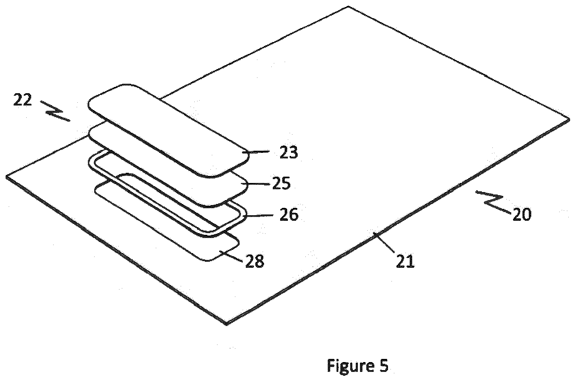

Referring now to Figure 5, a second embodiment of an infection control product, for example, pillow is provided, where the gasket 26 is 150 microns wide as opposed to 160 microns wide and the fabric 21 is composed of 65 g/m2 carbon black polyurethane coated on the bottom with 140 g/m2 polyamide. This embodiment improves filter durability while used on infection control products such as operation room table topping cushioning devices known as operation room table toppers.

The manufacturing process to manufacture the infection control bedding product of the second embodiment includes the step of applying heat to the entire surface area of the filter medium using for instance a heating plate, as opposed to applying heat around the vent (aperture) in the infection control bedding product cover fabric using for instance, heat welding as in the first embodiment.

With respect to components and method of manufacture apart from the above specified alterations, the second embodiment mirrors the first embodiment.

Accordingly, the present invention also provides a method of manufacture of the hermetically sealed infection bedding product such as a cushion, pillow, duvet, mattress or such like, comprising the steps of:
a) providing a filter membrane
b) providing a strengthening layer
c) providing a cover of the bedding product, the cover having an aperture adapted to receive the filter membrane and strengthening layer; and
d) adhering the layers a), b) and the cover c) together by applying adhesive in the form of a plurality of dots on the surface of the strengthening layer which faces the filter membrane,
(e)applying heat to the entire surface area of the filter medium , for instance, by applying a heated plate, to the entire surface area so as to bond all of the surface areas together to form the filter medium and additionally, the adhesive applied, in the form of adhesive dots, around the vent in the pillow have the effect of assisting in achieving a bond of the carbon black PU fabric so that when heat is applied, the layers are sealed together and are impermeable to liquid, whereby the filter membrane and strengthening material are bonded together across the entire surface area and with the cover of the infection control bedding product, at the vent (aperture) in the cover so as to provide an effective filter in the infection control bedding product such as for operation theatre table topping infection control cushioning devices. Advantageously, an improved air flow through the filter medium is achieved relative to the first embodiment; and this improved air flow is especially useful in larger infection control bedding product such as the operation theatre table topping cushioning devices or mattresses which contain a larger volume of air than a smaller volume infection control bedding product such as a pillow.

Thus, the present invention provides an infection control bedding product including pillow(s), cushioning device(s), matress(es) or the like which is particularly advantageous for use in hospitals and other medical institutions as a safeguard against the spread of bacteria and Hospital Acquired Infection (HAI), in general. The present invention can also be applied to other bedding products such as mattresses, cushions including wheelchair cushions and duvets, for example, which similarly have a sealed cover containing resiliently deformable filling material.

It will be appreciated that though the invention has been described with reference to a hermetically sealed pillow, the invention provides for infection control for bedding and soft furnishings generally. Indeed, advantageously, the invention can be applied in any situation where there is a regular changeover in persons using pillows, duvets and the like to prevent cross-infection.

In addition to high risk areas such as hospitals and medical institutions generally, the invention can be applied more widely in other situations where there is a regular turnover of persons using this type of bedding and furnishings, such as in hotels, guesthouses and the like. The infection control pillow and bedding products of the invention may also be used in domestic applications to avoid problems with dust mites and fungal infections. It is also envisaged that this type of pillow product could be incorporated in headrests for airline seating, as well as having military applications including sleeping bags and the like.

It is to be understood that the invention is not limited to the specific details described here which are given by way of example only and that various modification and alterations are possible without departing from the scope of the invention as defined in the appended claims.

## Claims

1. A hermetically sealed infection control bedding product such as a pillow (10), duvet, mattress, cushion or such like having a sealed cover (11) and having a resiliently deformable filling material, comprising a vent means in the cover (11), wherein an aperture (14) is formed in the cover (11) of the product and is adapted to receive the vent means; wherein the vent means comprises a filter medium (12) including a filter membrane (13) for the removal of particles of microbial size and wherein the filter medium (12) also comprises a strengthening layer (15) of material for providing mechanical strength to the filter medium (12), wherein the filter medium (12) also comprises an adhesive layer, whereby the filter medium (12) allows air flow therethrough but is substantially impermeable to liquid while maintaining a barrier to particles of microbial size, **characterised in that** the adhesive layer is formed from a plurality of dots of adhesive applied to the strengthening layer (15);.

2. A hermetically sealed infection control bedding product as claimed in claim 1 wherein the layer of strengthening material included in the filter medium (12), comprises a material providing mechanical strength, and preferably comprises a thermoplastic material.

3. A hermetically sealed infection control bedding product as claimed in claim 1 or claim 2 wherein the vent further includes a gasket (16) adapted to ensure that edges of the vent joined to the cover (11) of the infection control product are sealed and impermeable to liquid.

4. A hermetically sealed infection control bedding product as claimed in claim 3 wherein the gasket (16) is of dimensions corresponding to the dimensions of the aperture (14) in the cover (11) of the infection control product into which the vent is located.

5. A hermetically sealed infection control bedding product as claimed in claim 3 or claim 4 wherein the gasket (16) is manufactured of the same material as the cover (11) of the infection control product.

6. A hermetically sealed infection control bedding product as claimed in claim 1 wherein the filter membrane (13) includes means for substantially preventing liquid ingress, while allowing air to permeate, said means being provided by the filter membrane (13) comprising a hydrophobic material or oleophobic material.

7. A hermetically sealed infection control bedding product as claimed in claim 6 wherein the filter membrane (13) is manufactured of an oleophobic expanded PTFE membrane including a backing support optionally, the backing support being formed of non-woven material.

8. A hermetically sealed infection control bedding product as claimed in any one of the preceding claims wherein the filter membrane (13) comprises a bacteriological filter so as to prevent the ingress of bacteria to an interior of the cover (11).

9. A hermetically sealed infection control bedding product as claimed in claim 8 wherein the filter membrane (13) is adapted to block passage of particles having a size of 0.03 microns or greater.

10. A hermetically sealed infection control bedding product as claimed in any one of the preceding claims wherein the cover (11) of the infection control bedding product such as a pillow is manufactured of polyurethane coated polymeric material, for example polyurethane coated nylon.

11. A hermetically sealed infection control bedding product as claimed in claim 1 wherein the aperture (14) in the cover (11) of the infection control product is located so that the seam (9) of the filter medium (12) and aperture (14) is not integral with any perimeter seam (9) of the cover (11) of the infection control product.

12. A hermetically sealed infection control bedding product as claimed in claim 8 wherein the filter membrane (13) is adapted by having a pore size of between 0.2 and 4 microns.

13. A method of manufacture of the hermetically sealed infection bedding product according to claim 1 such as a cushion, pillow, duvet, mattress or such like, comprising the steps of:
a) providing a filter membrane (13)
b) providing a strengthening layer (15)
c) providing a cover (11) of the bedding product, the cover (11) having an aperture (14) adapted to receive the filter membrane (13) and strengthening layer (15); and
d) adhering the layers a), b) and the cover (11) c) together by applying adhesive in the form of a plurality of dots on the surface of the strengthening layer (15) which faces the filter membrane (13),
(e) Applying heat so that when heat is applied, the layers are sealed together and are impermeable to liquid, whereby the filter membrane (13) and strengthening material are bonded together with the cover (11) of the infection control bedding product, at an aperture (14) in the cover (11) so as to provide a vent in the infection control bedding product.

14. A method of manufacture as claimed in claim 13 wherein a gasket (16) manufactured of thermoplastic material is provided between steps b) and c) and the gasket (16) is also bonded together with the filter membrane (13) and the strengthening layer (15), to the cover (11) of the product; optionally wherein the gasket (16) is manufactured of the same material as the cover (11) of the product; optionally wherein the layers are affixed together by bonding; optionally wherein the bonding is carried out by gluing or welding.

## Patentansprüche

1. Luftdicht verschlossenes Bettwäscheerzeugnis mit Infektionsschutz, wobei es sich bei dem Erzeugnis etwa um ein Kopfkissen (10), ein Oberbett, eine Matratze, ein Kissen oder dergleichen mit einer verschlossenen Hülle (11) und mit einem elastisch verformbaren Füllstoff handelt, wobei die Hülle (11) eine Lüftungseinrichtung umfasst, wobei in der Hülle (11) des Erzeugnisses eine Öffnung (14) ausgebildet ist, die sich ferner zur Aufnahme der Lüftungseinrichtung eignet; wobei die Lüftungseinrichtung ein Filtermedium (12) umfasst, mit einer Filtermembran (13) zur Entfernung von Teilchen in mikrobieller Größe, und wobei das Filtermedium (12) ferner eine Verstärkungsschicht (15) aus einem Material umfasst, um dem Filtermedium (12) mechanische Festigkeit zu verleihen, wobei das Filtermedium (12) ferner eine Adhäsionsmittelschicht umfasst, wobei das Filtermedium (12) eine Luftströmung dort hindurch ermöglicht, jedoch im Wesentlichen undurchlässig ist für Flüssigkeit, während es eine Sperre für Teilchen in mikrobieller Größe aufrechterhält, **dadurch gekennzeichnet, dass** die Adhäsionsmittelschicht aus einer Mehrzahl von Adhäsionsmittelpunkten gebildet wird, die auf die Verstärkungsschicht (15) aufgetragen sind.

2. Luftdicht verschlossenes Bettwäscheerzeugnis mit Infektionsschutz nach Anspruch 1, wobei die in dem Filtermedium (12) enthaltene Schicht aus verstärkendem Material ein Material umfasst, das mechanische Festigkeit bereitstellt und das vorzugsweise ein thermoplastisches Material umfasst.

3. Luftdicht verschlossenes Bettwäscheerzeugnis mit Infektionsschutz nach Anspruch 1 oder Anspruch 2, wobei die Lüftungseinrichtung eine Dichtung (16) umfasst, die dazu geeignet ist, sicherzustellen, dass mit der Hülle (11) des Infektionsschutzerzeugnisses verbundenen Ränder versiegelt und flüssigkeitsundurchlässig sind.

4. Luftdicht verschlossenes Bettwäscheerzeugnis mit Infektionsschutz nach Anspruch 3, wobei die Dichtung (16) Abmessungen aufweist, die den Abmessungen der Öffnung (14) in der Hülle (11) des Infektionsschutzerzeugnisses entsprechen, in dem sich die Lüftungseinrichtung befindet.

5. Luftdicht verschlossenes Bettwäscheerzeugnis mit Infektionsschutz nach Anspruch 3 oder Anspruch 4, wobei die Dichtung (16) aus dem gleichen Material wie die Hülle (11) des Infektionsschutzerzeugnisses hergestellt ist.

6. Luftdicht verschlossenes Bettwäscheerzeugnis mit Infektionsschutz nach Anspruch 1, wobei die Filtermembran (13) ein Mittel aufweist, um das Eindringen von Flüssigkeit im Wesentlichen zu verhindern, während es gleichzeitig das Ein- und Austreten von Luft ermöglicht, wobei das durch die Filtermembran (13) bereitgestellte Mittel ein hydrophobes Material oder ein oleophobes Material umfasst.

7. Luftdicht verschlossenes Bettwäscheerzeugnis mit Infektionsschutz nach Anspruch 6, wobei die Filtermembran (13) aus einer oleophoben erweiterten PTFE-Membran hergestellt ist, die optional eine Trägerschicht aufweist, wobei die Trägerschicht aus einem Vliesstoff gebildet wird.

8. Luftdicht verschlossenes Bettwäscheerzeugnis mit Infektionsschutz nach einem der vorstehenden Ansprüche, wobei die Filtermembran (13) einen bakteriologischen Filter umfasst, um das Eindringen von Bakterien in ein Inneres der Hülle (11) zu verhindern.

9. Luftdicht verschlossenes Bettwäscheerzeugnis mit Infektionsschutz nach Anspruch 8, wobei die Filtermembran (13) den Durchgang von Teilchen mit einer Größe von 0,03 Mikron oder größer verhindern kann.

10. Luftdicht verschlossenes Bettwäscheerzeugnis mit Infektionsschutz nach einem der vorstehenden Ansprüche, wobei die Hülle des Bettwäscheerzeugnisses mit Infektionsschutz, wie etwa eines Kissens, aus einem mit Polyurethan beschichtetem Polymerstoff hergestellt wird, wie etwa aus mit Polyurethan beschichtetem Nylon.

11. Luftdicht verschlossenes Bettwäscheerzeugnis mit Infektionsschutz nach Anspruch 1, wobei die Öffnung (14) in der Hülle (11) des Infektionsschutzerzeugnisses so angeordnet ist, dass die Naht (9) des Filtermediums (12) und der Öffnung (14) nicht integral ist mit jeglicher umlaufenden Naht (9) der Hülle (11) des Infektionsschutzerzeugnisses.

12. Luftdicht verschlossenes Bettwäscheerzeugnis mit Infektionsschutz nach Anspruch 8, wobei die Filtermembran (13) durch eine Porengröße zwischen 0,2 und 4 Mikron geeignet ist.

13. Verfahren zur Herstellung des luftdicht verschlossenen Bettwäscheerzeugnisses mit Infektionsschutz nach Anspruch 1, wie etwa eines Kissens, eines Kopfkissens, des Oberbetts, einer Matratze oder dergleichen, wobei das Verfahren die folgenden Schritte umfasst:
a) Bereitstellen einer Filtermembran (13);
b) Bereitstellen einer Verstärkungsschicht (15);
c) Bereitstellen einer Hülle (11) des Bettwäscheerzeugnisses, wobei die Hülle (11) eine Öffnung (14) aufweist, welche die Filtermembran (13) und die Verstärkungsschicht (15) aufnehmen kann; und
d) Zusammenkleben der Schichten a), b) und der Hülle (11) c) durch Auftragen eines Adhäsionsmittels in Form einer Mehrzahl von Punkten auf die Oberfläche der Verstärkungsschicht (15), die zu der Filtermembran (13) gerichtet ist;
e) Applizieren von Wärme, so dass die Schichten beim Applizieren von Wärme miteinander versiegelt und für Flüssigkeit undurchlässig werden, wobei die Filtermembran (13) und das Verstärkungsmaterial mit der Hülle (11) des Bettwäscheerzeugnisses mit Infektionsschutz an einer Öffnung (14) in der Hülle (11) miteinander verbunden werden, um in dem Bettwäscheerzeugnis mit Infektionsschutz eine Entlüftung bereitzustellen.

14. Verfahren zur Herstellung nach Anspruch 13, wobei eine aus thermoplastischem Material hergestellte Dichtung (16) zwischen den Schritten b) und c) bereitgestellt wird, und wobei die Dichtung (16) auch mit der Filtermembran (13) und der Verstärkungsschicht (15) mit der Hülle (11) des Erzeugnisses verbunden wird; wobei die Dichtung (16) optional aus dem gleichen Material wie die Hülle (11) des Erzeugnisses hergestellt wird; wobei die Schichten optional durch Bonding aneinander befestigt werden; wobei das Bonding optional durch Kleben oder Schweißen ausgeführt wird.

## Revendications

1. Produit de literie de prévention des infections hermétiquement scellé, tel qu'un oreiller (10), une couette, un matelas, un coussin ou autre ayant une enveloppe scellée (11) et ayant un matériau de remplissage élastiquement déformable, comprenant des moyens d'aération dans l'enveloppe (11), une ouverture (14) étant formée dans l'enveloppe (11) du produit et étant conçue pour recevoir les moyens d'aération ; les moyens d'aération comprenant un milieu filtrant (12) comprenant une membrane filtrante (13) pour l'élimination de particules de taille microbienne et le milieu filtrant (12) comprenant également une couche de renforcement (15) de matériau pour fournir une résistance mécanique au milieu filtrant (12), le milieu filtrant (12) comprenant également une couche adhésive, moyennant quoi le milieu filtrant (12) permet la circulation de l'air à travers celui-ci mais est sensiblement imperméable aux liquides tout en maintenant une barrière aux particules de taille microbienne, **caractérisé en ce que** la couche adhésive est formée d'une pluralité de points d'adhésif appliqués à la couche de renforcement (15).

2. Produit de literie de prévention des infections hermétiquement scellé selon la revendication 1, la couche de matériau de renforcement comprise dans le milieu filtrant (12) comprenant un matériau offrant une résistance mécanique, et de préférence comprenant un matériau thermoplastique.

3. Produit de literie de prévention des infections hermétiquement scellé selon la revendication 1 ou la revendication 2, l'aération comprenant en outre un joint (16) conçu pour garantir que les bords de l'aération joints à l'enveloppe (11) du produit de prévention des infections sont scellés et imperméables aux liquides.

4. Produit de literie de prévention des infections hermétiquement scellé selon la revendication 3, le joint (16) ayant des dimensions correspondant aux dimensions de l'ouverture (14) dans l'enveloppe (11) du produit de prévention des infections dans lequel l'aération est située.

5. Produit de literie de prévention des infections hermétiquement scellé selon la revendication 3 ou la revendication 4, le joint (16) étant fabriqué dans le même matériau que l'enveloppe (11) du produit de prévention des infections.

6. Produit de literie de prévention des infections hermétiquement scellé selon la revendication 1, la membrane filtrante (13) comprenant des moyens pour empêcher sensiblement l'entrée de liquide, tout en permettant à l'air de pénétrer, lesdits moyens étant fournis par la membrane filtrante (13) qui comprend un matériau hydrophobe ou un matériau oléophobe.

7. Produit de literie de prévention des infections hermétiquement scellé selon la revendication 6, la membrane filtrante (13) étant fabriquée à partir d'une membrane de PTFE expansé oléophobe comprenant éventuellement un support arrière, le support arrière étant formé d'un matériau non tissé.

8. Produit de literie de prévention des infections hermétiquement scellé selon l'une quelconque des revendications précédentes, la membrane filtrante (13) comprenant un filtre bactériologique de sorte à empêcher la pénétration de bactéries à l'intérieur de l'enveloppe (11).

9. Produit de literie de prévention des infections hermétiquement scellé selon la revendication 8, la membrane filtrante (13) étant conçue pour bloquer le passage de particules d'une taille égale ou supérieure à 0,03 micron.

10. Produit de literie de prévention des infections hermétiquement scellé selon l'une quelconque des revendications précédentes, l'enveloppe (11) du produit de literie de prévention des infections, tel qu'un oreiller, étant fabriquée dans un matériau polymère recouvert de polyuréthane, par exemple du nylon recouvert de polyuréthane.

11. Produit de literie de prévention des infections hermétiquement scellé selon la revendication 1, l'ouverture (14) dans l'enveloppe (11) du produit de prévention des infections étant située de sorte que la couture (9) du milieu filtrant (12) et de l'ouverture (14) ne fasse pas partie intégrante d'une couture périphérique (9) de l'enveloppe (11) du produit de prévention des infections.

12. Produit de literie de prévention des infections hermétiquement scellé selon la revendication 8, la membrane filtrante (13) étant conçue en ayant une taille de pore comprise entre 0,2 et 4 microns.

13. Procédé de fabrication du produit de literie de prévention des infections hermétiquement scellé selon la revendication 1, tel qu'un coussin, un oreiller, une couette, un matelas ou autre, comprenant les étapes consistant à :
a) fournir une membrane filtrante (13)
b) fournir une couche de renfort (15)
c) fournir une enveloppe (11) du produit de literie, l'enveloppe (11) ayant une ouverture (14) conçue pour recevoir la membrane filtrante (13) et la couche de renforcement (15) ; et
d) coller les couches a), b) et l'enveloppe (11) c) ensemble en appliquant de la colle sous forme d'une pluralité de points sur la surface de la couche de renforcement (15) qui fait face à la membrane filtrante (13),
(e) appliquer de la chaleur de sorte que, sous l'effet de la chaleur, les couches soient scellées ensemble et soient imperméables aux liquides, la membrane filtrante (13) et le matériau de renforcement étant liés ensemble à l'enveloppe (11) du produit de literie de prévention des infections, au niveau d'une ouverture (14) dans l'enveloppe (11) de sorte à fournir une aération dans le produit de literie de prévention des infections.

14. Procédé de fabrication selon la revendication 13, un joint (16) en matériau thermoplastique étant placé entre les étapes b) et c) et le joint (16) étant également lié avec la membrane filtrante (13) et la couche de renforcement (15) à l'enveloppe (11) du produit ; éventuellement, le joint (16) étant fabriqué dans le même matériau que l'enveloppe (11) du produit ; éventuellement, les couches étant fixées ensemble par liaison ; éventuellement, la liaison étant effectuée par collage ou soudage.
